# EUROPÄISCHE PATENTSCHRIFT

(11) **EP 2 159 847 B1**
(45) Veröffentlichungstag und Bekanntmachung des Hinweises auf die Patenterteilung: **26.06.2013**
(21) Anmeldenummer: 09168190.8
(22) Anmeldetag: 19.08.2009
(51) Int. Cl.: H01L 31/042, F24J 2/52

(54) **System aus einem rahmenlosen Dünnschichtsolarmodul und einer Befestigungsklammer**
System composed of a frameless thin solar module and a fixing clamp
Système comprenant un module solaire à couche fine sans cadre et une pince de fixation

(30) Priorität: 27.08.2008 DE 102008039879
(43) Veröffentlichungstag der Anmeldung: 03.03.2010
(73) Patentinhaber: Schüco TF GmbH & Co. KG, 33609 Bielefeld (DE)
(72) Erfinder: Stein, Wilhelm, 01324, Dresden (DE); Springer, Jiri, 01109, Dresden (DE)
(74) Vertreter: Kleine, Hubertus

(56) Entgegenhaltungen:
- EP-A2- 0 531 869
- DE-A1-102008 039 879
- DE-U1-202004 015 314
- DE-U1-202005 008 563
- DE-U1-202007 008 659
- DE-U1-202008 002 264
- US-A- 4 233 085
- US-A1- 2003 070 368

## Beschreibung

Die Erfindung betrifft ein System aus einem rahmenlosen Dünnschichtsolarmodul, das eine Vielzahl von Solarzellen in Form von Zellstreifen einer vorgegebenen Breite aufweist, und mindestens einer Befestigungsklammer zur Befestigung des Dünnschichtsolarmoduls an einer Trägervorrichtung.

Solarmodule dienen der direkten Umsetzung von Sonnenenergie in elektrischen Strom. Dünnschichtsolarmodulen weisen dazu photoaktive Schichten einer Dicke im Bereich von wenigen zehn Nanometern bis einigen Mikrometern auf. Üblicherweise werden die photoaktiven Schichten zusammen mit Kontakt- und ggf. Reflexionsschichten großflächig auf ein Substrat, beispielsweise eine Glasscheibe, aufgebracht. Mit Hilfe von einem oder mehreren Strukturierungsschritten wird eine Mehrzahl von einzelnen streifenförmigen Solarzellen gebildet, die elektrisch in Serie verschaltet sind. Die Breite der streifenförmigen Solarzellen, auch Zellstreifen genannt, liegt im Bereich von Zentimetern. Auf die äußeren Zellstreifen werden üblicherweise Stromabnehmer aufgebracht, über die das Dünnschichtsolarmodul angeschlossen wird und die erzeugte elektrische Leistung abgeführt werden kann.

Auf das beschichtete Substrat wird zumeist ein weiteres flächiges Material, zum Beispiel eine weitere Glasscheibe, auflaminiert, um die photoaktiven Schichten vor Beschädigungen und Witterungseinflüssen zu schützen. Zur Verstärkung des Solarmoduls kann ein umlaufender Rahmen (beispielsweise aus Aluminium) eingesetzt werden, insbesondere wenn ein nicht tragfähiges oder flexibles Substrat verwendet wird. Ist kein Rahmen vorgesehen, beispielsweise beim Einsatz von Glasscheiben als Substrat und als Abdeckung, spricht man von einem rahmenlosen Solarmodul.

Bei einer Befestigung eines rahmenlosen Solarmoduls, beispielsweise auf einem Hausdach, muss in der Regel ein Befestigungssystem an dem rahmenlosen Solarmodul angebracht werden, über das das Solarmodul in einem weiteren Schritt an einer Trägervorrichtung befestigt wird. Zu diesem Zweck sind Befestigungsklammern bekannt, die das rahmenlose Dünnschichtsolarmodul an seinem Rand umfassen. Die Befestigungsklammern ist dabei so ausgelegt, dass eine Verschattung beziehungsweise eine Abdeckung der Zellstreifen verhindert wird, durch die die Effizienz des Solarmoduls verringert werden könnte. Dies hat den Nachteil, dass das Befestigungssystem das Solarmodul an seiner dem Licht zugewandten Oberseite nicht oder nur in einem sehr schmalen Bereich übergreifen darf, um die Zellstreifen möglichst wenig abzudecken. Dieses kann zu einer ungünstigen Kräfteverteilung und somit zu einer Beschädigung des Moduls bei einem Anbringen auf einer Trägervorrichtung oder im Betrieb führen.

Ein rahmenloses Solarmodul mit Befestigungsklammern wird z.B in der DE 20 2007 008659 U1 offenbart.

Aufgabe der Erfindung ist es daher, ein System aus einem rahmenloses Dünnschichtsolarmodul und mindestens einer Befestigungsklammer zu schaffen, das eine einfache, kostengünstige und sichere Befestigung gewährleistet.

Die Aufgabe wird durch ein System mit den Merkmalen des Patentanspruchs 1 gelöst. Bei dem System weist das rahmenlose Dünnschichtsolarmodul eine Vielzahl von Solarzellen in Form von Zellstreifen einer vorgegebenen Breite auf, von denen an parallel zu den Zellstreifen verlaufenden gegenüberliegenden Seiten des Dünnschichtsolarmoduls jeweils ein äußerer Zellstreifen infolge einer Kontaktierung photovoltaisch inaktiv ist. Die mindestens eine Befestigungsklammer dient der Befestigung des Dünnschichtsolarmoduls an einer Trägervorrichtung und ist geeignet, das Dünnschichtsolarmodul an einer der parallel zur Längsrichtung der Zellstreifen verlaufenden Seiten zu umfassen. Das System zeichnet sich dadurch aus, dass die Befestigungsklammer einen der inaktiven äußeren Zellstreifen in einer Richtung senkrecht zur Längsrichtung der Zellstreifen, also in seiner Breite, im Wesentlichen vollständig abdeckt.

Durch die Kontaktierung des Solarmoduls wird die photoaktive Schicht an zwei gegenüberliegenden Seiten des Solarmoduls üblicherweise teilweise aufgeschmolzen. Dadurch werden die beiden äußeren Zellstreifen des Solarmoduls photoelektrisch inaktiv und können nicht oder nur wenig zu einem von dem Solarmodul erzeugten Photostrom beitragen. Eine Abdeckung dieser inaktiven Zellstreifen hat demnach keinen oder nur einen sehr geringen Einfluss auf die Effizienz des Solarmoduls. Dies macht sich die Erfindung zu Nutze, indem die Befestigungsklammer in den Bereich der inaktiven Zellstreifen hineinragt. Durch die damit entstandene breitere Auflagefläche werden auf das Solarmodul einwirkende Kräfte besser verteilt und Schäden am Solarmodul werden vermieden. Es kann eine maximal mögliche Auflagefläche für die Befestigungsklammer ausgenutzt werden, ohne dass eine Abschattung von aktiven Bereichen des Solarmoduls erfolgt.

In einer bevorzugten Ausgestaltung des Systems weist die Befestigungsklammer einen oberen Abschnitt auf, der auf eine Oberseite des Dünnschichtsolarmodul übergreift und damit den inaktiven äußeren Zellstreifen abdeckt.

In einer weiteren bevorzugten Ausgestaltung des Systems ist vorgesehen, die Befestigungsklammer in der Längsrichtung der Zellstreifen über die gesamte Ausdehnung des Dünnschichtsolarmoduls in dieser Richtung auszubilden. Durch diese Ausgestaltung wird die Auflagefläche für das Solarmodul maximiert. Alternativ kann die Befestigungsklammer in der Längsrichtung der Zellstreifen kürzer sein als die Ausdehnung des Dünnschichtsolarmoduls in dieser Richtung. Diese bevorzugten Ausgestaltung ist besonders geeignet, um den Materialaufwand und somit die Kosten bei dem Befestigungssystem möglichst klein zu halten

In einer weiteren bevorzugten Ausgestaltung des Systems weist die Befestigungsklammer einen Gummipuffer auf. Dadurch können sowohl Beschädigungen am Solarmodul vermieden, als auch ein passgenaues Anbringen der Befestigungsklammer am Solarmodul erreicht werden.

In einer weiteren bevorzugten Ausgestaltung des Systems ist mindestens eine Befestigungsklammer an jeder der zwei sich gegenüberliegenden und parallel zur Längsrichtung der Zellstreifen verlaufenden Seiten des Dünnschichtsolarmoduls vorgesehen. Dadurch ist eine optimale Befestigung des Solarmoduls garantiert.

Diese und weitere bevorzugte Ausgestaltungen des Systems aus dem rahmenlosem Dünnschichtsolarmodul und der mindestens einen Befestigungsklammer sind Gegenstand der abhängigen Ansprüche.

Die Erfindung wird nachfolgend an Ausführungsbeispielen anhand der Zeichnungen näher erläutert.

In den Zeichnungen zeigen:
- Figur 1: eine schematische Darstellung eines Ausführungsbeispiels eines Systems aus einem rahmenlosen Dünnschichtsolarmodul und Befestigungsklammern in einer Draufsicht,
- Figur 2: eine schematische Darstellung eines Systems aus einem rahmenlosen Dünnschichtsolarmodul und Befestigungsklammern in einem weiteren Ausführungsbeispiel,
- Figur 3: eine schematische Darstellung eines Systems aus einem rahmenlosen Dünnschichtsolarmodul und Befestigungsklammern in einem weiteren Ausführungsbeispiel,
- Figur 4: eine schematische Darstellung eines Systems aus einem rahmenlosen Dünnschichtsolarmodul und Befestigungsklammern in einer Seitenansicht,
- Figur 5: eine schematische Darstellung einer Befestigungsklammer für ein erfindungsgemäßes System in einem Ausführungsbeispiel,
- Figur 6: eine schematische Darstellung einer Befestigungsklammer für ein erfindungsgemäßes System in einem weiteren Ausführungsbeispiel,
- Figur 7: eine schematische Darstellung einer Befestigungsklammer für ein erfindungsgemäßes System in einem weiteren Ausführungsbeispiel,

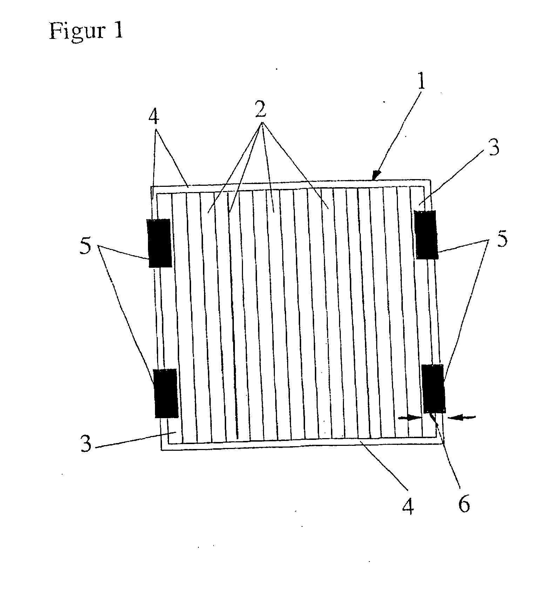

Figur 1 zeigt eine schematische Darstellung eines Systems aus einem rahmenlosen Dünnschichtsolarmodul und Befestigungsklammern in einer Draufsicht.

Das rahmenlose Dünnschichtsolarmodul 1 weist Zellstreifen 2 als Solarzellen, inaktive äußere Zellstreifen 3 sowie einen nicht mit Zellstreifen 2, 3 beschichteter Bereich 4 auf. Am Dünnschichtsolarmodul 1 sind Befestigungsklammern 5 angebracht, die einen oberen Abschnitt 6 aufweisen.

Das rahmenlose Dünnschichtsolarmodul 1 ist aus einer Vielzahl von Solarzellen zusammengesetzt, die von den Zellstreifen 2 gebildet werden, die jeweils eine vorgegebene Breite aufweisen. An Außenseiten des Dünnschichtsolarmoduls 1 befindet sich der nicht beschichtete Bereich 4, der nicht mit Zellstreifen 2, 3 belegt ist, um eine witterungsbeständigere Verkapselung photoaktiver Schichten zu ermöglichen.

Das rahmenlose Solarmodul 1 ist dabei beispielsweise als Glas-Glas-Laminat ausgeführt, wobei auf eine erste, als Substrat fungierende Glasscheibe photoaktive Schichten zusammen mit Kontakt- und ggf. Reflexionsschichten aufgebracht sind. Die Schichten sind mittels Laserbehandlung oder auf mechanische Art geeignet strukturiert und bilden einzelne Zellstreifen 2, 3 die elektrisch in Serie geschaltet sind. Eine zweite Glasscheibe wird mit Hilfe einer Dichtungsmasse auf die beschichtete erste Glasscheibe auflaminiert, um die dazwischen liegenden Schichten zu schützen. Als auflaminiertes Material kann selbstverständlich aber auch ein anderes Material (zum Beispiel Kunststoff) eingesetzt werden.

Eine Kontaktierung des Dünnschichtsolarmoduls 1 zum Aufbringen von zwei - hier nicht dargestellten - seitlichen Stromabnehmern an den beiden äußeren Zellstreifen 3 erfolgt in diesem Ausführungsbeispiel durch Löten, wodurch die betreffende photoaktive Schicht der äußeren Zellstreifen 3 teilweise oder auch ganz aufgeschmolzen wird. Dadurch werden die beiden äußeren Zellstreifen 3 photoelektrisch komplett inaktiv oder weisen zumindest nur einen sehr geringen Wirkungsgrad auf.

In diesem Ausführungsbeispiel sind vier Befestigungsklammern 5 an zwei gegenüberliegenden, parallel zu den Zellstreifen 2 verlaufenden Seiten des Dünnschichtsolarmoduls 1 vorgesehen. Die Anzahl von vier Befestigungsklammern 5 ist dabei in keiner Weise einschränkend zu verstehen. Selbstverständlich können ebenso mehr oder weniger Befestigungsklammern 5 vorgesehen sein.

Von den Befestigungsklammern 5 ist in der dargestellten Draufsicht im Wesentlichen nur der auf eine Oberseite des Dünnschichtsolarmoduls übergreifende obere Abschnitt 6 zu sehen, dessen Länge in der Richtung senkrecht zur Längsrichtung der Zellstreifen 2 durch die Pfeile in Figur 1 nochmals verdeutlicht ist.

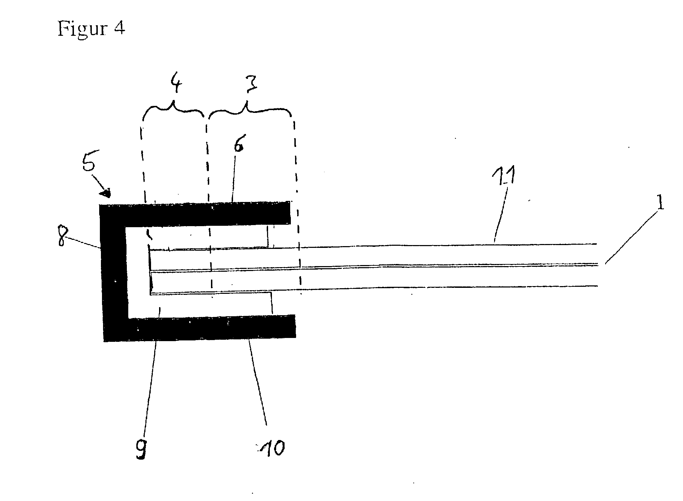

Die Befestigungsklammern 5 sind im Wesentlichen U-förmig ausgestaltet und bestehen beispielsweise aus Metall. Die Befestigungsklammern 5 können zudem Gummipuffer aufweisen, so dass bei einem Anbringen der Befestigungsklammern 5 an dem Dünnschichtsolarmodul 1 eine Beschädigung des Dünnschichtsolarmoduls 1 verhindert wird. Zur genauen Ausgestaltung der Befestigungsklammern 5 wird an dieser Stelle auf die Beschreibung der Figuren 4 bis 8 verwiesen.

Die Befestigungsklammern 5 umklammern die Seiten des Dünnschichtsolarmoduls 1 und weisen dafür den oberen Abschnitt 6 einer vorbestimmten Länge auf (angedeutet durch die Bemaßungspfeile), mit der sie dabei auf die Oberseite des Dünnschichtsolarmoduls 1 übergreifen. Die Länge des oberen Abschnitts 6 ist derart ausgestaltet, dass die Befestigungsklammern 5 den nicht mit Zellstreifen beschichteten Bereich 4 komplett und den jeweils äußeren, durch die Kontaktierung inaktiven Zellstreifen 3 im Wesentlichen ganz abdecken.

Dadurch, dass die beiden äußeren Zellstreifen 3 durch die Kontaktierung inaktiv sind, können sie zum Anbringen der Befestigungsklammern 5 ausgenutzt werden, ohne dass darauf Rücksicht genommen werden muss, dass diese Bereiche des Dünnschichtsolarmoduls 1 nicht verdeckt bzw. verschattet werden dürfen. Dadurch steht wesentlich mehr Platz zum Anbringen der Befestigungsklammern 5 zur Verfügung, wodurch eine gleichmäßigere Verteilung von auf das Dünnschichtsolarmodul 1 einwirkenden Kräften erreicht wird. Dies beugt einer Beschädigung beziehungsweise einem vorzeitigen Verschleiß des Dünnschichtsolarmoduls 1 vor.

Die Befestigungsklammern 5 weisen in diesem Ausführungsbeispiel in Richtung der Längsrichtung der Zellstreifen 2 eine Abmessung von jeweils einigen Zentimetern auf. Auf diese Weise ist eine Material sparende und somit kostengünstige Befestigung möglich.

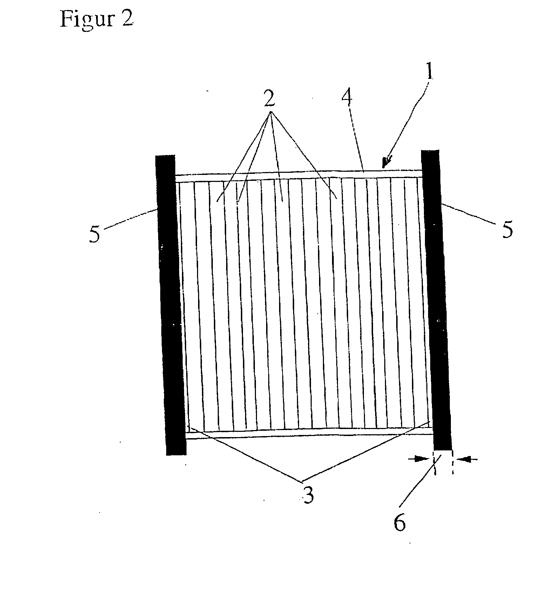

Figur 2 zeigt eine schematische Darstellung eines Systems aus einem rahmenlosen Dünnschichtsolarmodul und Befestigungsklammern in einem weiteren Ausführungsbeispiel.

Es gelten dieselben Bezugszeichen wie bei der Beschreibung von Figur 1.

Das rahmenlose Dünnschichtsolarmodul 1 weist wiederum die Zellstreifen 2 als Solarzellen, die inaktiven äußere Zellstreifen 3 sowie den nicht mit Zellstreifen 2, 3 beschichteten Bereich 4 auf. Am Dünnschichtsolarmodul 1 ist in diesem Ausführungsbeispiel an den parallel zu den Zellstreifen 2 verlaufenden Seiten jeweils eine Befestigungsklammer 5 angebracht, wobei die Befestigungsklammern 5 wiederum den oberen Abschnitt 6 aufweisen.

Der obere Abschnitt 6, angedeutet durch die Pfeile, ist in seiner Länge - analog zu Figur 1 - derart ausgestaltet, dass die Befestigungsklammern 5 den nicht beschichteten Bereich 4 komplett und den jeweils äußeren, durch die Kontaktierung inaktiven Zellstreifen 3 im Wesentlichen ganz abdecken. Rücksicht auf eine mögliche Verschattung der äußeren Zellstreifen 3 muss dabei nicht genommen werden, die die äußeren Zellstreifen 3 durch die Kontaktierung des Dünnschichtsolarmoduls inaktiv gemacht worden sind, wie bereits bei der Beschreibung von Figur 1 erläutert wurde.

Die Ausdehnung der Befestigungsklammern 5 in der Längsrichtung der Zellstreifen 2 ist in diesem Ausführungsbeispiel derart ausgestaltet, dass die parallel zu den Zellstreifen 2 des Dünnschichtsolarmoduls 1 verlaufenden Seiten in ihrer kompletten Länge eingefasst werden. Dabei ragen die Befestigungsklammern 5 in der Längsrichtung der Zellstreifen 2 über das Dünnschichtsolarmodul 1 hinaus, was für eine Befestigung der Befestigungsklammern 5 an einer Trägervorrichtung vorteilhaft sein kann. Alternativ können die Befestigungsklammern 5 direkt mit den Seiten des Dünnschichtsolarmoduls 1 abschließen, indem die Breite der Befestigungsklammern 5 der Länge der parallel zu den Zellstreifen 2 verlaufenden Seiten des Dünnschichtsolarmoduls 1 entspricht.

Eine derartige Ausgestaltung der Befestigungsklammern 5 hat den Vorteil, dass jeweils nur eine Befestigungsklammer 5 an einer parallel zu den Zellstreifen 2 verlaufen Seite zum Ziele eines sicheren Befestigens des Dünnschichtsolarmoduls in der Trägervorrichtung angebracht werden muss. Ein gleichmäßiges Verteilen der auf das Dünnschichtsolarmodul 1 wirkenden Kräfte ist garantiert. Dadurch, dass jeweils nur eine Befestigungsklammer 5 angebracht werden muss, kann Aufwand bei der Montage gespart werden. Ebenso ist es - abhängig von den auf das Dünnschichtsolarmodul 1 wirkenden Kräften und einer gewünschten Anbringungsweise in der Trägervorrichtung - vorstellbar, dass nur an einer der parallel zu den Zellstreifen 2 verlaufenden Seiten eine Befestigungsklammer 5 vorgesehen ist.

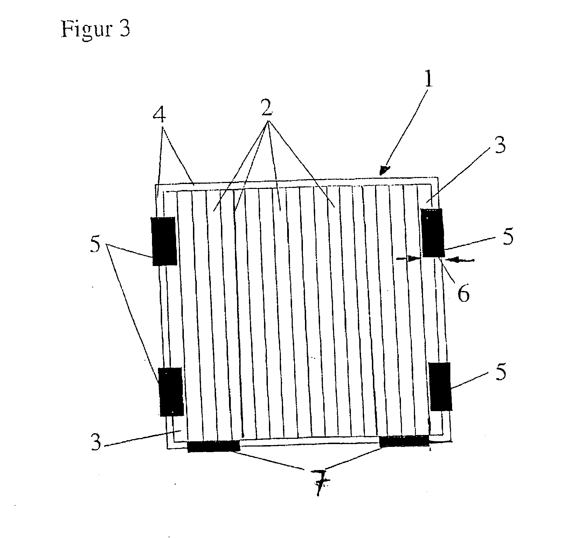

Figur 3 zeigt eine schematische Darstellung eines Systems aus einem rahmenlosen Dünnschichtsolarmodul und Befestigungsklammern in einem weiteren Ausführungsbeispiel. Auch hier gelten die selben Bezugszeichen wie bei der Beschreibung von den Figuren 1 und 2. Die Bezugszeichen behalten auch für die noch folgenden Figuren 4 bis 7 ihre Gültigkeit.

Figur 3 greift das in Figur 1 dargestellte System aus dem rahmenlosen Dünnschichtsolarmodul 1 und den Befestigungsklammern 5 wieder auf. Zusätzlich sind an einer quer zu den Zellstreifen 2 des Dünnschichtsolarmoduls 1 verlaufenden Seite weitere Klammern 7 vorgesehen, die auf die Oberseite des Dünnschichtsolarmoduls 1 übergreifen. Selbstverständlich könnten weitere Klammern 7 auch an den beiden quer zu den Zellstreifen 2 verlaufenden Seiten angebracht werden.

Im Unterschied zu den Befestigungsklammern 5 decken die Klammern 7 nur den nicht mit Zellstreifen 2, 3 beschichteten Bereich 4 des Dünnschichtsolarmoduls 1 ab. Eine Verschattung der Zellstreifen 2 wird somit ausgeschlossen.

Das Anbringen der weiteren Klammern 7 an den quer zu den Zellstreifen 2 verlaufenden Seiten des Dünnschichtsolarmoduls 1 hat beispielsweise den Vorteil, dass das System aus Dünnschichtsolarmodul 1 und Befestigungsklammern 5 noch sicherer an der Trägervorrichtung angebracht werden kann und die auf das Dünnschichtsolarmodul 1 wirkenden Kräfte noch effektiver verteilt werden.

Figur 4 zeigt eine schematische Darstellung eines Systems aus einem rahmenlosen Dünnschichtsolarmodul und Befestigungsklammern in einer Seitenansicht. Neben den bereits vorgestellten Komponenten des Systems weist die Befestigungsklammer 5 in diesem Ausführungsbeispiel einen metallischen Grundkörper 8 und einen Gummipuffer 9 auf. Weiterhin ist in dieser Ansicht ein unterer Abschnitt 10 der Befestigungsklammer 5 sowie eine Oberseite 11 des Dünnschichtsolarmoduls 1 sichtbar. Die Befestigungsklammer 5 umfasst das Dünnschichtsolarmodul U-förmig. Der obere Abschnitt 6 der Befestigungsklammer 5 übergreift die Oberseite 11 des Dünnschichtsolarmoduls 1 und verdeckt dabei zum einen den nicht mit Zellstreifen 2, 3 beschichteten Bereich 4 ganz und zum anderen den durch die Kontaktierung inaktiven äußeren Zellstreifen 3 im Wesentlichen vollständig. Die genannten Bereiche sind in der dargestellten Seitenansicht mit Hilfe der gestrichelten Linien dargestellt.

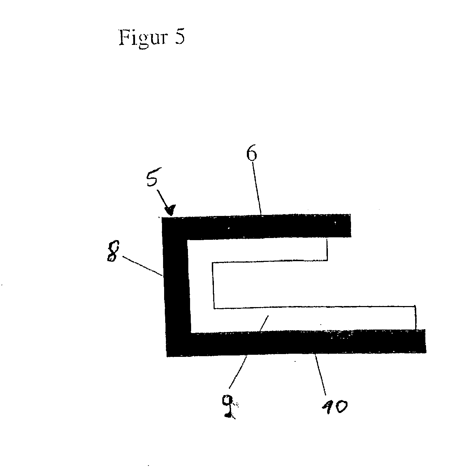

Der untere Abschnitt 10 der Befestigungsklammer 5, welcher sich an einer Unterseite des Dünnschichtsolarmoduls 1 befindet, kann in seiner Länge beispielsweise so ausgestaltet sein, dass seine Länge mit der Länge des oberen Abschnitts 6 übereinstimmt. Selbstverständlich kann der obere Abschnitt 8 zur Erreichung einer besseren Kräfteverteilung wesentlich länger ausgestaltet sein, als der obere Abschnitt 6 (siehe dazu auch Figur 5).

Die Befestigungsklammer 5 weist den Gummipuffer 9 auf. Durch den Gummipuffer 9 wird ein passgenaues Anbringen der Befestigungsklammer 5 an dem Dünnschichtsolarmodul 1 sichergestellt. Zudem werden durch den Gummipuffer 9 Beschädigungen an dem Dünnschichtsolarmodul 1 vermieden.

Der Gummipuffer 9 befindet sich in diesem Ausführungsbeispiel zwischen einem metallischen Grundkörper 8 der Befestigungsklammer 5 und dem Dünnschichtsolarmodul 1. Dabei ist der Gummipuffer 9 in den Grundkörper 8 eingebracht (beispielsweise eingeklebt). Auch eine Einbettung des metallischen Grundkörpers 8 in den Gummipuffer 9 ist möglich. Ebenso ist es aber vorstellbar, dass der Gummipuffer 9 nicht fest mit der Befestigungsklammer 5 verbunden ist, sondern vor dem Anbringen der Befestigungsklammer 5 auf das Dünnschichtsolarmodul 1 aufgelegt wird.

Durch die einfache Ausgestaltung der Befestigungsklammer 5 ist eine kostengünstige Produktion ohne großen Aufwand sowie ein einfaches Anbringen an dem Dünnschichtsolarmodul 1 sichergestellt.

Die Figuren 5, 6 und 7 zeigen jeweils eine weitere Ausgestaltung einer Befestigungsklammer in einer schematischen Darstellung.

In dem Ausführungsbeispiel der Figur 5 ist der Abschnitt 8 der Befestigungsklammer 5, der sich auf der Unterseite des Dünnschichtsolarmoduls 1 befindet, wesentlich länger ausgestaltet, als der über die Oberseite 11 des Dünnschichtsolarmoduls 1 greifende obere Abschnitt 6. Dadurch können die auf das Dünnschichtsolarmodul 1 wirkenden Kräfte noch besser aufgenommen und an ein Befestigungssystem weitergegeben werden.

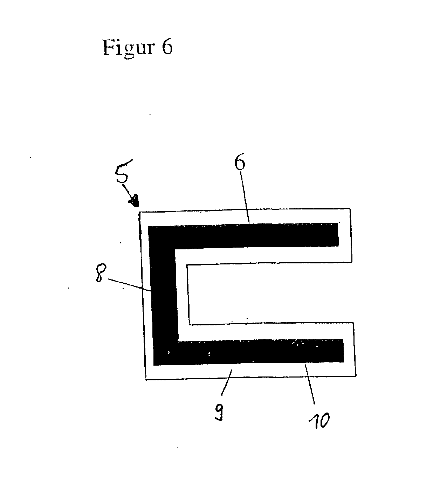

Figur 6 zeigt eine schematische Darstellung einer Befestigungsklammer in einem weiteren Ausführungsbeispiel.

In dem in Figur 6 dargestellten Ausführungsbeispiel ist der metallische Grundkörper 8 der Befestigungsklammer 5 komplett in den Gummipuffer 9 eingebettet. Diese Ausführung bietet zusätzlichen Kratz- bzw. Beschädigungsschutz bei einem Anbringen der Befestigungsklammer 5 an dem Dünnschichtsolarmodul 1.

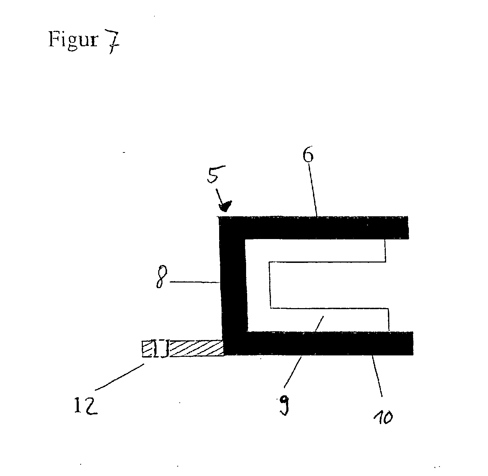

In dem in Figur 7 dargestellten Ausführungsbeispiel weist die Befestigungsklammer 5 eine Befestigungsmöglichkeit 12 auf.

Die Befestigungsmöglichkeit 12 dient zur Befestigung der Befestigungsklammer 5 und somit des von ihr gehaltenen Dünnschichtsolarmoduls 1 an einer hier nicht dargestellten Trägervorrichtung. Die Befestigungsmöglichkeit 12 wird durch eine Lasche in einer von dem Dünnschichtsolarmodul 1 abgewandeten Verlängerung des Abschnitts 8 gebildet. Die Lasche weist in diesem Ausführungsbeispiel eine Bohrung zur Aufnahme einer Schraub- oder Nietverbindung zwischen der Befestigungsklammer 5 und der Trägervorrichtung auf. Für diese Art der Befestigung sollte die entsprechende Trägervorrichtung über ein der Befestigungsmöglichkeit 12 entsprechendes Gegenstück (zum Beispiel Bohrloch oder Gewindebohrung) verfügen.

Selbstverständlich kann die Befestigungsmöglichkeit 12 aber nicht nur eine Schraub- oder Nietverbindung aufweisen. Ebenso vorstellbar ist die Ausgestaltung der Befestigungsmöglichkeiten 12 entsprechend einer Klemmverbindung zwischen der Befestigungsklammer 5 und der Trägervorrichtung. Auch eine Verbindung von Befestigungsklammer 5 und Trägervorrichtung mittels einer Klebung ist denkbar.

### Bezugszeichenliste

- 1: rahmenloses Dünnschichtsolarmodul
- 2: Zellstreifen
- 3: inaktiver, äußerer Zellstreifen
- 4: nicht beschichteter Bereich
- 5: Befestigungsklammer
- 6: oberer Abschnitt
- 7: weitere Klammer
- 8: Grundkörper
- 9: Gummipuffer
- 10: unterer Abschnitt
- 11: Oberseite
- 12: Befestigungsmöglichkeit

## Patentansprüche

1. System aus
- einem rahmenlosen Dünnschichtsolarmodul (1), das eine Vielzahl von Solarzellen in Form von Zellstreifen (2) einer vorgegebenen Breite aufweist, von denen an parallel zur Längsrichtung der Zellstreifen (2) verlaufenden gegenüberliegenden Seiten des Dünnschichtsolarmoduls (1) jeweils ein äußerer Zellstreifen (3) infolge einer Kontaktierung photovoltaisch inaktiv ist, und
- mindestens einer Befestigungsklammer (5) zur Befestigung des Dünnschichtsolarmoduls (1) an einer Trägervorrichtung, die geeignet ist, das Dünnschichtsolarmodul (1) an einer der parallel zur Längsrichtung der Zellstreifen (2) verlaufenden Seiten zu umfassen,
**dadurch gekennzeichnet, dass**
die Befestigungsklammer (5) einen der inaktiven äußeren Zellstreifen (3) in einer Richtung senkrecht zur Längsrichtung der Zellstreifen (2) im Wesentlichen vollständig abdeckt.

2. System nach Anspruch 1,
**dadurch gekennzeichnet, dass**
die Befestigungsklammer einen oberen Abschnitt (6) aufweist, der auf eine Oberseite (10) des Dünnschichtsolarmodul (1) übergreift und damit den inaktiven äußeren Zellstreifen (3) abdeckt.

3. System nach einem der Ansprüche 1 oder 2,
**dadurch gekennzeichnet, dass**
die Befestigungsklammer (5) in der Längsrichtung der Zellstreifen (2) kürzer ist als die Ausdehnung des Dünnschichtsolarmoduls (1) in dieser Richtung.

4. System nach einem der Ansprüche 1 oder 2,
**dadurch gekennzeichnet, dass**
die Befestigungsklammer (5) in der Längsrichtung der Zellstreifen (2) über die gesamte Ausdehnung des Dünnschichtsolarmoduls (1) in dieser Richtung ausgebildet ist.

5. System nach einem der Ansprüche 1 bis 4,
**dadurch gekennzeichnet, dass**
die Befestigungsklammer (5) U-förmig ausgestaltet ist.

6. System nach einem der Ansprüche 1 bis 5,
**dadurch gekennzeichnet, dass**
die Befestigungsklammer (5) einen metallischen Grundkörper (8) aufweist.

7. System nach einem der Ansprüche 1 bis 6,
**dadurch gekennzeichnet, dass**
die Befestigungsklammer (5) einen Gummipuffer (9) aufweist.

8. System nach Anspruch 6 und 7,
**dadurch gekennzeichnet, dass**
der Gummipuffer (9) zwischen dem metallischen Grundkörper (8) der Befestigungsklammer (5) und dem Dünnschichtsolarmodul (1) angeordnet ist.

9. System nach Anspruch 8,
**dadurch gekennzeichnet, dass**
der Gummipuffer (9) in den metallischen Grundkörper (8) der Befestigungsklammer (5) eingelegt ist.

10. System nach Anspruch 6 und 7,
**dadurch gekennzeichnet, dass**
der metallische Grundkörper (8) der Befestigungsklammer (5) in den Gummipuffer (9) eingebettet ist.

11. System nach einem der Ansprüche 1 bis 10,
**dadurch gekennzeichnet, dass**
die Befestigungsklammer (5) Befestigungsmöglichkeiten (10) für eine Befestigung an einer Trägervorrichtung aufweist.

12. System nach Anspruch 11,
**dadurch gekennzeichnet, dass**
die Befestigungsmöglichkeiten (10) für eine Schraub- und/oder Klemm- und/oder Klebeverbindung geeignet sind.

13. System nach einem der Ansprüche 1 bis 12,
**dadurch gekennzeichnet, dass**
mindestens eine Befestigungsklammer (5) an jeder der zwei sich gegenüberliegenden und parallel zur Längsrichtung der Zellstreifen (2) verlaufenden Seiten des Dünnschichtsolarmoduls (1) vorgesehen ist.

## Claims

1. System made up of
- a frameless thin-layer solar module (1) which has a multiplicity of solar cells in the form of cell strips (2) of a predetermined width, of which, on opposite sides of the thin-layer solar module (1) which run parallel to the longitudinal direction of the cell strips (2), in each case one outer cell strip (3) is photovoltaically inactive as a result of contact, and
- at least one fastening clamp (5) for fastening the thin-layer solar module (1) on a carrier arrangement, the clamp being suitable for enclosing the thin-layer solar module (1) on one of the sides running parallel to the longitudinal direction of the cell strips (2),
**characterized in that**
the fastening clamp (5) essentially completely covers one of the inactive outer cell strips (3) in a direction perpendicular to the longitudinal direction of the cell strips (2).

2. System according to Claim 1,
**characterized in that**
the fastening clamp has an upper portion (6), which engages over an upper side (10) of the thin-layer solar module (1) and thus covers the inactive outer cell strip (3).

3. System according to either of Claims 1 and 2,
**characterized in that**
the fastening clamp (5), as seen in the longitudinal direction of the cell strips (2), is shorter than the extent of the thin-layer solar module (1) in this direction.

4. System according to either of Claims 1 and 2,
**characterized in that**
the fastening clamp (5), as seen in the longitudinal direction of the cell strips (2), is formed over the entire extent of the thin-layer solar module (1) in this direction.

5. System according to one of Claims 1 to 4,
**characterized in that**
the fastening clamp (5) is of U-shaped configuration.

6. System according to one of Claims 1 to 5,
**characterized in that**
the fastening clamp (5) has a metallic basic body (8).

7. System according to one of Claims 1 to 6,
**characterized in that**
the fastening clamp (5) has a rubber buffer (9).

8. System according to Claims 6 and 7,
**characterized in that**
the rubber buffer (9) is arranged between the metallic basic body (8) of the fastening clamp (5) and the thin-layer solar module (1).

9. System according to Claim 8,
**characterized in that**
the rubber buffer (9) is introduced into the metallic basic body (8) of the fastening clamp (5).

10. System according to Claims 6 and 7,
**characterized in that**
the metallic basic body (8) of the fastening clamp (5) is embedded in the rubber buffer (9).

11. System according to one of Claims 1 to 10,
**characterized in that**
the fastening clamp (5) has fastening means (10) for fastening on a carrier arrangement.

12. System according to Claim 11,
**characterized in that**
the fastening means (10) are suitable for a screw connection and/or clamping connection and/or adhesive-bonding connection.

13. System according to one of Claims 1 to 12,
**characterized in that**
at least one fastening clamp (5) is provided on each of the two opposite sides of the thin-layer solar module (1) which run parallel to the longitudinal direction of the cell strips (2).

## Revendications

1. Système composé
- d'un module solaire à couche fine (1) sans cadre, qui présente une pluralité de cellules solaires se présentant sous la forme de bandes de cellules (2) d'une largeur prédéfinie, parmi lesquelles respectivement une bande de cellules (3) extérieure est inactive d'un point de vue photovoltaïque suite à une mise en contact au niveau des côté du module solaire à couche fine (1), opposés s'étendant de manière parallèle par rapport au sens longitudinal des bandes de cellules (2), et
- au moins d'une pince de fixation (5) servant à fixer le module solaire à couche fine (1) au niveau d'un dispositif de support qui est adapté pour entourer le module solaire à couche fine (1) au niveau d'un côté s'étendant de manière parallèle par rapport au sens longitudinal des bandes de cellules (2),
**caractérisé en ce**
**que** la pince de fixation (5) recouvre essentiellement complètement une des bandes de cellules (3) extérieures inactives dans une direction de manière perpendiculaire par rapport au sens longitudinal des bandes de cellules (2).

2. Système selon la revendication 1,
**caractérisé en ce**
**que** la pince de fixation présente une section supérieure (6) qui chevauche un côté supérieur (10) du module solaire à couche fine (1) recouvrant ce faisant la bande de cellules (3) extérieure inactive.

3. Système selon l'une quelconque des revendications 1 ou 2,
**caractérisé en ce**
**que** la pince de fixation (5) est plus courte dans le sens de la longueur des bandes de cellules (2) que l'étendue du module solaire à couche fine (1) dans ledit sens de la longueur.

4. Système selon l'une quelconque des revendications 1 ou 2,
**caractérisé en ce**
**que** la pince de fixation (5) est réalisée dans le sens de la longueur des bandes de cellules (2) sur toute l'étendue du module solaire à couche fine (1) dans ledit sens de la longueur.

5. Système selon l'une quelconque des revendications 1 à 4,
**caractérisé en ce**
**que** la pince de fixation (5) est configurée de manière à présenter une forme de U.

6. Système selon l'une quelconque des revendications 1 à 5,
**caractérisé en ce**
**que** la pince de fixation (5) présente un corps de base (8) métallique.

7. Système selon l'une quelconque des revendications 1 à 6,
**caractérisé en ce**
**que** la pince de fixation (5) présente un tampon en caoutchouc (9).

8. Système selon la revendication 6 et 7,
**caractérisé en ce**
**que** le tampon en caoutchouc (9) est disposé entre le corps de base (8) métallique de la pince de fixation (5) et le module solaire à couche fine (1).

9. Système selon la revendication 8,
**caractérisé en ce**
**que** le tampon en caoutchouc (9) est inséré dans le corps de base (8) métallique de la pince de fixation (5).

10. Système selon la revendication 6 et 7,
**caractérisé en ce**
**que** le corps de base (8) métallique de la pince de fixation (5) est intégré dans le tampon en caoutchouc (9).

11. Système selon l'une quelconque des revendications 1 à 10,
**caractérisé en ce**
**que** la pince de fixation (5) présente des possibilités de fixation (10) pour une fixation au niveau d'un dispositif de support.

12. Système selon la revendication 11,
**caractérisé en ce**
**que** les possibilités de fixation (10) sont appropriées pour un assemblage par vissage et/ou par serrage et/ou par collage.

13. Système selon l'une quelconque des revendications 1 à 12,
**caractérisé en ce**
**qu'**au moins une pince de fixation (5) est prévue au niveau de chacun des deux côtés du module solaire à couche fine (1), opposés et s'étendant de manière parallèle par rapport au sens de la longueur des bandes de cellules (2).
